# DEMANDE DE BREVET EUROPEEN

(11) **EP 0 913 765 A1**
(43) Date de publication de la demande: **06.05.1999**
(21) Numéro de dépôt: 98402701.1
(22) Date de dépôt: 29.10.1998
(51) Int. Cl.: G06F 9/32

(54) **Processeur avec commande d'instructions répétables ou multicycles**

(30) Priorité: 31.10.1997 FR 9713730
(71) Demandeur: STMicroelectronics SA, 94250 Gentilly Cedex (FR)
(72) Inventeur: Noel-Baron, Bertrand, 75116 Paris (FR); Carre, Laurent, 75116 Paris (FR)
(74) Mandataire: Ballot, Paul Denis Jacques

(57) **Abrégé**

Pour prendre en comte des instructions répétables, on prévoit de modifier un décodeur (11) d'instructions de façon à ce qu'il comporte un premier circuit (15) pour décoder, dans une instruction, le caractère répétable de cette instruction et pour produire et maintenir un signal de répétition correspondant. Ce signal de répétition est pris en compte pour compter (16,17) le nombre de fois où une instruction répétable est mise en oeuvre. Le décodeur de l'invention comporte par ailleurs un deuxième circuit (18) pour prélever, dans une instruction ainsi répétable, une information de nombre de fois où cette instruction doit être répétée, et pour charger un registre de préréglage (17) avec ce nombre.

## Description

La présente invention a pour objet un processeur de traitement perfectionné. Elle trouve une application plus particulière dans le domaine du traitement de signal notamment dans le décodage de canal avec des processeurs qui mettent en oeuvre des algorithmes dits de VITERBI. Le perfectionnement dont il est question dans l'invention vise essentiellement à augmenter la vitesse: il s'agit de traiter un très grand nombre de bits le plus rapidement possible.

Dans certaines applications, notamment les applications de transmission de signaux, la qualité d'un canal de transmission est suffisamment dégradée pour que des informations reçues en sortie du canal soient douteuses. D'une manière connue, il est prévu de convoluer dans le temps des informations envoyées. Le mode de convolution est tel qu'il comporte pour les signaux reçus des conformations ou des états interdits. En réception, il suffit donc de calculer, pour des éléments d'information reçus (en général un couple de bits), un ensemble d'informations à envoyer qui, convoluées entre elles, sont susceptibles d'avoir eu pour résultat l'information reçue. Les informations sont convoluées avec des informations précédentes, et précédemment reçues. Il est possible sur ces informations précédentes d'effectuer la même analyse. Il est ainsi possible de remonter dans le temps en correspondance avec des informations précédemment reçues.

Toutes les remontées dans le temps qui aboutissent à des états interdits n'ont en pratique pas pu avoir été envoyées et doivent donc être éliminées.

Pour simplifier on peut admettre que, pour un couple de bits reçus, il est nécessaire de calculer sur 256 occurrences précédentes, quelle était la signification d'un couple de bits réellement émis au début de ces 256 occurrences. Autrement dit, à chaque couple de bits reçus, il y a la prise en compte des 256 occurrences précédentes. Compte-tenu du débit d'informations désiré, par exemple de un mégabit par seconde dans le traitement de la parole, le processeur doit être capable d'effecteur jusqu'à 256 traitements en moins d'une micro-seconde.

Les opérations qui doivent être effectuées dans ces traitements peuvent comporter des opérations de multiplication accumulation, MAC. Par exemple pour chacune des 256 traitements évoqués jusqu'ici, il peut y avoir un calcul de 8 ou 16 opérations MAC élémentaires.

Dans l'état de la technique, il est connu de réaliser les opérations répétitives, les 8 ou 16 opérations élémentaires, en faisant charger par le processeur, au début de la série, un registre compteur avec la valeur 8 ou 16. Puis le processeur lance une itération de la fonction MAC. Puis le processeur décrémente le compteur d'une unité et compare la valeur de ce compteur à une valeur de référence. Selon le résultat, on réitère ou non les trois opérations ci-dessus. Lorsque la macro-opération MAC est terminée, on peut passer à la suivante dans la liste des 256 à exécuter. Etant donné que le chargement du registre compteur, sa décrémentation et sa comparaison à une valeur de référence sont des ordres lancés par le processeur, celui-ci est sollicité excessivement souvent et, à moins d'être très rapide, il ne peut effectuer le travail dans le temps requis.

Pour résoudre ce problème on a déjà eu l'idée de mettre en place des co-processeurs où des instructions multicycle. La conception d'un coprocesseur de même que celle d'une instruction multicycle présente l'inconvénient de devoir savoir, au préalable, quelle sera la nature de l'instruction exécutée. Le co-processeur est par exemple prédéterminé pour effectuer 16 opérations MAC. Si on veut qu'il soit capable d'en effectuer 24, il faut le changer. Pour une instruction multicycle, le problème est le même. Un séquenceur, ou une machine d'état, définit à la base les opérations exécutables (au besoin se substitue au processeur pour certaines instructions simples). Le problème à résoudre est évidemment que le séquenceur est figé et que son caractère figé est une gêne à l'extension d'un jeu d'instructions, par ajout d'instructions nouvelles répétables.

Dans l'invention, on a résolu ce problème en tirant parti du fait que lors de l'exécution des instructions réitérables, un registre d'instruction du processeur, qui est mis à jour à chaque cycle machine par le séquenceur du processeur, est rebouclé sur lui-même pour permettre son rechargement avec la même instruction tant que l'exécution de celle-ci n'est pas terminée. Ce mécanisme est utilisé alors dans l'invention pour réaliser une fonction de répétition d'une instruction quelconque.

Selon l'invention, lorsque qu'une instruction répétable est chargée dans le registre d'instruction, elle est spécifiquement reconnue comme telle par un étage de décodage du processeur. Le processeur autorise alors le chargement d'un compteur avec une valeur de référence contenue dans l'instruction et active un automate de comptage qui opère à chaque nouveau cycle de machine. Tant que le compteur n'a pas atteint la valeur de référence, le registre d'instructions est rechargé avec la même instruction selon ce mécanisme. Ceci réalise alors la fonction de répétition recherchée sans avoir à la faire exécuter par le processeur lui-même. Pour simplifier les explications, et dans le but d'éviter les confusions, on parlera par la suite de réitération quand il s'agit d'itérations successives de l'état de la technique, et de répétition quand il s'agit du procédé de l'invention.

Un avantage obtenu par le mécanisme de l'invention est une minimisation des modifications de définition d'un processeur lors de la réalisation des jeux d'instructions supplémentaires. Un autre avantage est la possibilité de rendre une séquence de répétition interruptible par le fait même qu'un mécanisme d'instruction multicycle autoriserait déjà cette interruption.

L'invention a donc pour objet un processeur de traitement comportant:
- un étage d'extraction d'instruction relié en entrée à une mémoire d'instructions,
- un registre d'instructions,
- un premier multiplexeur relié, en entrée, à la sortie de l'étage d'extraction et à la sortie du registre d'instructions et relié, en sortie, à l'entrée du registre d'instruction,
- un décodeur d'instructions relié en entrée au registre d'instructions,
caractérisé en ce qu'il comporte en outre
- un premier circuit dans le décodeur d'instruction pour décoder qu'une instruction est une instruction à répéter et pour produire en conséquence un signal de répétition,
- un compteur autonome avec un registre de préréglage,
- un deuxième circuit dans le décodeur d'instruction pour charger le registre de préréglage avec une valeur contenue dans l'instruction à répéter,
- un troisième circuit, par exemple dans le décodeur, pour produire un signal d'exécution d'instruction et l'appliquer au compteur, et
- un circuit de commande pour commander le premier multiplexeur par un signal délivré par le compteur.

L'invention sera mieux comprise à la lecture de la description qui suit et à l'examen des figures qui l'accompagnent. Celles-ci ne sont données qu'à titre indicatif et nullement limitatif de l'invention. Les figures montrent:
Figure 1: un processeur de traitement conforme à l'invention;
Figure 2: trois types d'instructions exécutables par le processeur de l'invention: une instruction d'un nouveau type et deux instructions classiques.

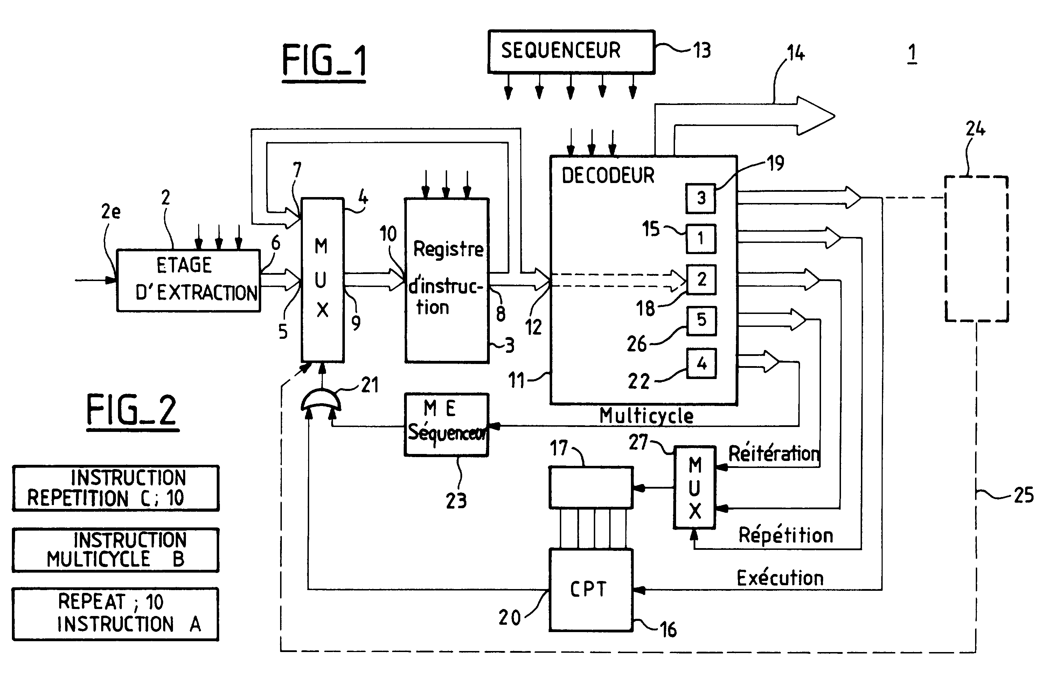

La figure 1 montre un processeur 1 de traitement conforme à l'invention. Le processeur 1 comporte un étage d'extraction 2 qui est relié à son entrée 2e à une mémoire d'instruction non représentée. Il comporte également un registre d'instruction 3. Un premier multiplexeur 4 est relié par une entrée 5 à la sortie 6 de l'étage 2 et par une entrée 7 à la sortie 8 du registre d'instruction 3. Par sa sortie 9 il est connecté à l'entrée 10 du registre d'instruction 3. Le processeur 1 comporte par ailleurs un décodeur 11 relié par son entrée 12 à la sortie 8 du registre d'instruction 3. Tous ces circuits fonctionnent sous le contrôle d'un séquenceur 13 d'une manière connue. Le décodeur 11 produit sur un bus 14, pour simplifier un bus d'adresses, de données, et de commandes, des signaux utiles correspondant au traitement exécuté par le décodeur. De ce fait le décodeur 11 reçoit par ailleurs d'autres signaux non représentés, notamment des données en provenance de mémoire de données non représentées.

Dans l'invention, le décodeur 11 comporte un premier circuit 15 pour décoder qu'une instruction est une instruction à répéter et pour produire en conséquence un signal de répétition. Le processeur de l'invention comporte également un compteur 16 muni d'un registre de pré-réglage 17. Le décodeur 11 comporte en outre un deuxième circuit 18 pour charger le registre de pré-réglage 17 du compteur 16 avec une valeur contenue dans une instruction à répéter. Le décodeur 11 comporte enfin un troisième circuit 19 pour produire un signal d'exécution élémentaire de l'instruction. Ce signal d'exécution élémentaire, qui peut aussi être un signal de cycle produit par le séquenceur 13, est appliqué au compteur 16.

Le principe de fonctionnement de l'invention est le suivant. Une instruction qui doit être répétée, par exemple l'instruction INSTRUCTION REPETITION C ; 10, figure 2, est chargée dans le registre d'instruction 3. Le circuit 15 du décodeur 11 détecte une conformation spécifique des bits de l'instruction C. Cette conformation signifie son caractère répétable. Ici, ceci est indiqué schématiquement en faisant apparaître le mot REPETITION dans le code instruction lui-même. Autrement dit, le circuit 15 est un circuit apte à décoder la présence du mot REPETITION ou une conformation de bits correspondant à cette signification. Le circuit 15 produit alors un signal actif de répétition. Ce signal est maintenu à l'état actif tant que l'instruction à répéter n'est pas complètement exécutée avec toutes ses répétitions. Le signal de répétition valide le fonctionnement du compteur 16.

Le deuxième circuit 18 du décodeur prélève la quantité en argument dans l'instruction, ici la valeur 10, et l'applique après remise à zéro du compteur 16 au registre de pré-réglage 17. Eventuellement, ce prélèvement peut comporter un décodage, mais le plus simple est de charger (en binaire) la valeur exacte dans l'instruction C.

A chaque temps de cycle du processeur, cadencé par les ordres du séquenceur, le séquenceur 13, ou un circuit 19 du décodeur 11, constate l'exécution d'une des répétitions de l'instruction C et envoie un signal correspondant au compteur 16. Le compteur 16 incrémente alors sa valeur d'une unité. Lorsque le compteur 16 arrive à la valeur stockée dans le registre 17 il délivre sur sa sortie 20 un signal de commande appliqué à un circuit de commande 21. Le compteur 16 a un fonctionnement autonome, indépendant du fonctionnement du séquenceur 13. Il lui suffit d'être muni de ses circuits (de type connu) de comparaison et de remise à zéro.

Le circuit 21 est en relation de commande avec le multiplexeur 4. De ce fait, tant que le signal délivré par le circuit de commande 21 est actif le multiplexeur 4 provoque le maintien dans le registre d'instruction 3 d'une instruction qu'il était allé chercher avec l'étage d'extraction d'instruction 2 au préalable. Une fois que le comptage atteint la valeur préchargée, le multiplexeur 4 bascule et l'étage d'extraction fournit au registre d'instruction 3 et au décodeur 11 une nouvelle instruction.

D'une manière connue, un processeur de l'état de la technique est capable d'effecteur des instructions multicycle. Celui de l'invention, de préférence, en est aussi capable. Par exemple, une instruction multicycle est une instruction du type INSTRUCTION MULTICYCLES B (figure 2). Cette instruction B est décodée par un quatrième circuit 22 du décodeur 11. Le quatrième circuit 22 produit un signal dit multicycle indiquant que l'instruction est de type multicycle. De façon connue, ce signal multicycle est appliqué à une machine d'états 23 qui délivre un signal de maintien destiné normalement au multiplexeur 4. Dans l'invention le signal de maintien délivré par la machine d'états 23 est combiné, avec le signal de sortie du compteur 16, dans une porte OU 21 pour maintenir le multiplexeur dans sa position de réinjection de la même instruction. A la fin de l'exécution de l'instruction multicycle, comme à la fin du comptage du nombre d'exécutions d'une opération répétitive, le multiplexeur 4 bascule pour autoriser le transfert d'une nouvelle instruction disponible dans l'étage d'extraction 2.

Le processeur de l'invention est par ailleurs capable de mettre en oeuvre les instructions classiques de réitération de l'état de la technique. On parle ici de réitération par opposition à répétition. Il s'agit cependant d'un même concept: une réitération présentant l'inconvénient de devoir être gérée par le processeur (autrement dit par des cycles de fonctionnement du décodeur 11 lui-même), alors qu'avec l'automate de l'invention, les trois opérations de chargement, d'exécution et décrémentation ou incrémentation du compteur sont effectuées en un seul cycle.

Une instruction de réitération est montrée sur la figure 2. Elle est composite. Elle comporte une première instruction dite REPEAT;10 et une deuxième instruction à lancer à la suite, l'instruction INSTRUCTION A. C'est l'instruction INSTRUCTION A qui doit être réitéré. De ce fait l'étage d'extraction 2 extraira d'abord l'instruction REPEAT;10, puis l'instruction INSTRUCTION A. L'instruction REPEAT;10 a normalement pour objet de charger dans un registre 24 la valeur de paramétrisation, ici 10, de l'instruction REPEAT. Ce faisant le séquenceur 13 provoque ensuite le chargement de l'instruction INSTRUCTION A dans le registre d'instruction 3, son exécution, la décrémentation du registre 24, la comparaison de la valeur de ce registre à une valeur zéro et la réitération, par envoi d'un ordre au multiplexeur 4 correspondant. Ce dernier envoi est acheminé par une liaison en tirets 25.

En quelque sorte l'invention simplifie d'une part le séquenceur 13 et d'autre part accélère le travail effectué par le décodeur 11: celui-ci n'ayant plus à effectuer ni la décrémentation du registre 24, ni la comparaison de la valeur de ce registre 24 à une valeur finale. Pour autoriser néanmoins un fonctionnement de ce type, on a prévu que le décodeur 11 comporterait un cinquième circuit 26 pour charger dans le registre 17 le nombre de fois où l'instruction qui suit l'instruction REPEAT doit être exécutée.

Un multiplexeur 27 reçoit les valeurs décodées par le premier circuit 2 et par le cinquième circuit 26. Ce multiplexeur 27 est commandé par le signal de répétition résultant de la détection de ce que l'instruction à effecteur plusieurs fois est une instruction de répétition (selon l'invention) ou une instruction de réitération (selon l'état de la technique).

Dans le cas où il s'agit d'une instruction de réitération, c'est l'instruction suivante, que l'étage d'extraction 2 doit aller chercher, qu'il faut exécuter (et non pas l'instruction REPEAT elle-même). Ceci justifie la présence du multiplexeur 27.

Par rapport à l'état de la technique, l'invention présente en limitation que le premier circuit 15 dans le décodeur est nécessaire. Celui-ci détecte le caractère répétable de l'instruction à partir de la conformation de bits de cette instruction. Le nombre de conformation de bits étant limité, toutes les instructions ne peuvent pas être répétables. Un certain nombre seulement peuvent l'être. Pour les autres, on utilisera le couple d'instructions de l'état de la technique. On y gagne cependant à faire fonctionner l'automate et à réduire les sollicitations du séquenceur 13.

## Revendications

1. Processeur de traitement comportant
- un étage (2) d'extraction d'instructions relié en entrée à une mémoire d'instructions ,
- un registre (3) d'instructions,
- un premier multiplexeur (4) relié, en entrée (5, 7), à la sortie (6) de l'étage d'extraction et à la sortie (8) du registre d'instructions et relié, en sortie (9), à l'entrée (10) du registre d'instruction,
- un décodeur (11) d'instructions relié en entrée (12) au registre d'instructions,
caracterisé en ce qu'il comporte en outre
- un compteur (16) avec un registre de préréglage (17)
- un premier circuit (15) dans le décodeur d'instructions pour décoder qu'une instruction est une instruction à répéter et pour produire en conséquence un signal de répétition,
- un deuxième circuit (18) dans le décodeur d'instructions pour charger le registre de préréglage avec une valeur contenue dans l'instruction à répéter,
- un troisième circuit (19), par exemple dans le décodeur d'instructions, pour produire un signal d'exécution d'instruction et l'appliquer au compteur
- un quatrième circuit (22) dans le décodeur d'instructions pour décoder qu'une instruction est multicycle,
- un cinquième circuit (26) dans le décodeur d'instructions pour décoder qu'une instruction est une instruction de réitération (REPEAT).

2. Processeur de traitement caracterisé en ce qu'il comporte un circuit (21) de commande pour commander le premier multiplexeur par un signal délivré par le compteur.

3. Processeur de traitement caracterisé en ce que,
- ce processeur comporte un circuit séquenceur (13) pour recevoir un signal multicycle et pour produire un signal de maintien,
- le quatrième circuit (22) produit un signal multicycle et l'applique au séquenceur,
- le circuit de commande comporte une porte ou pour recevoir les signaux délivrés par le compteur et le séquenceur et produire le signal de commande du premier multiplexeur.

4. Processeur de traitement caracterisé en ce le cinquième registre (26) précharge un deuxième multiplexeur relié aux deuxième et au cinquième circuits pour précharger le registre de préréglage du compteur-decompteur avec une valeur qui dépend du signal délivré par le premier circuit.
